# EUROPEAN PATENT APPLICATION

(11) **EP 0 829 857 A2**
(43) Date of publication of application: **18.03.1998**
(21) Application number: 97115455.4
(22) Date of filing: 05.09.1997
(51) Int. Cl.: G11B 7/09, G11B 7/135, G11B 7/13

(54) **Focus error detection system for an optical head**

(30) Priority: 06.09.1996 JP 236950/96
(71) Applicant: NEC CORPORATION, Tokyo (JP)
(72) Inventor: Yamanaka, Yutaka, Minato-ku, Tokyo (JP)
(74) Representative: Betten & Resch

(57) **Abstract**

A focus error detection system in an optical head has an optical divider for dividing an optical beam reflected from an optical disk, and first and second light receiving areas on a photodetector for receiving the split optical beam. Each of the first and second light receiving areas has first and second light receiving sections divided by a boundary which receives one of the split optical beams at the center thereof. Both the difference signals obtained by subtracting the output of the first light receiving section from the output of the second light receiving section of the first and second light receiving areas are respectively normalized by summed signals obtained by adding the outputs of the first and second light receiving sections of the first and second light receiving areas. Both the normalized difference signals are added to obtain a focus error signal for a focus control of the optical head.

## Description

### BACKGROUND OF THE INVENTION

### (a) Field of the Invention

The present invention relates to a focus error detection system in an optical head and, in particular, to the improvement of a focus error detection system used in an optical disc drive for recording and reproducing information by using an optical beam.

### (b) Description of the Related Art

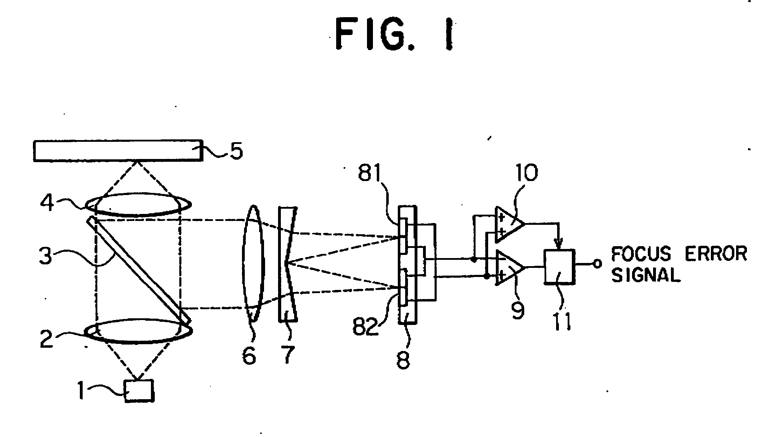

A focus error signal is generally used to detect the focal point of an optical spot when an optical head is focusing light from a laser to make the optical spot for irradiating the optical disc. Foucault test and double-knife-edge test are known as conventional methods for detecting a focus error signal. Fig.1 shows an example of Foucault method wherein an optical beam emitted from a laser 1 is focused as a minute spot by a collimating lens 2 and a condensing lens 4 to be incident on the optical disc 5. Light reflected from the optical disc 5 is separated by a beam splitter or half mirror 3 to be introduced to a focus error detection system, wherein the reflected beam passes the convergence lens 6 and the wedge prism 7 which divides the beam. The two split beams are received by respective receiving areas 81 and 82 of a split type photodetector 8. Each of the two receiving areas 81 and 82 has two receiving sections divided by a central dividing line and each of the two split beams is received just on each of the central dividing lines of the receiving areas 81 and 82 to provide a pair of electric signals.

Both the pairs of electric signals detected on the receiving sections are combined and then subjected to subtraction and addition to form a difference signal and a summed signal in the subtracter 9 and the adder 10, respectively. By controlling the gain of a gain control circuit 11 based on the summed signal, the gain controlled difference signal is output as a focus error signal.

In the conventional system as described above, if the focal point of the optical spot deviates from the surface of the optical disc 5, the difference in the received amounts of light between both sides of central line of each receiving area of the photodetector changes accordingly.

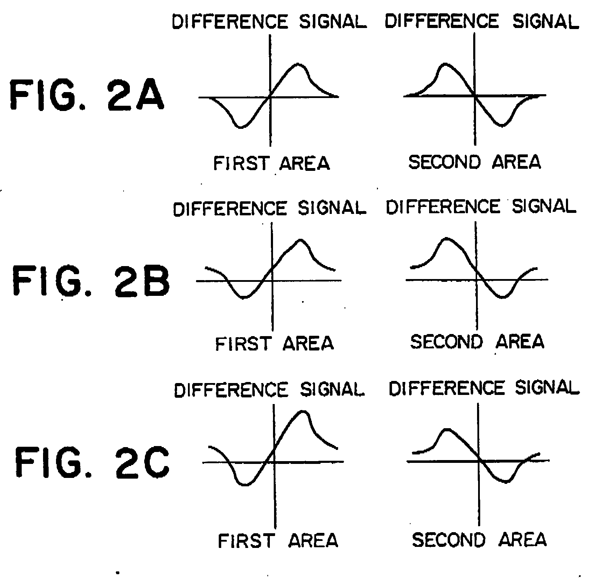

Fig.2A shows the S-shaped characteristic curve of the difference signals for both the first and second areas 81 and 82 of the photodetector which is plotted as a function of the focus error. The outputs from the receiving areas of the photodetector are reversed in polarity between the two receiving areas.

In Fig.1, the top section of the first area 81 (as viewed in the figure) and the bottom section 82 of the second area are connected together, whereas the bottom section of the first area 81 and the top section of the second area 82 are connected together, to obtain a pair of first and second signals. The adder 10 adds the first and second signals to obtain a summed signal, whereas the subtracter 9 subtracts the second signal from the first signal to obtain a difference signal.

Gain adjustment in the gain control circuit 11 based on the summed signal provides a normalized output for the focus error signal which follows the changes in the reflection level from the optical disc as a function of the focus error.

In the focus error detection system of Fig.1, if an offset is generated in the S-shaped characteristic, as shown in Fig2B, due to deviation of the focal point from the optical disc 5, the offset appears in the same polarity in both the difference signals and are cancelled in the detection system.

However, if there is a difference in the sensitivity of the two receiving areas 81 and 82, or if the amount of the light in the two divided beams are not equal, the offset differs from each other and are not cancelled after the addition of the both areas, as shown in Fig.2C. Thus, the offset retards the focus error detecting system from obtaining an accurate focus error signal.

### SUMMARY OF THE INVENTION

It is an object of the present invention to solve the above problem and to provide a focus error detection system for use in an optical head, which is capable of obtaining a highly accurate focus error signal.

The present invention provides a focus error detection system in an optical head comprising an optical system for irradiating an optical disk by an optical spot to receive the optical spot reflected from the optical disk, an optical divider for dividing the reflected optical spot into a pair of optical beams, a photodetector having first and second light receiving areas for receiving the pair of optical beams, respectively, each of the first and second light receiving areas having first and second light receiving sections, a first adder for adding outputs of the first and second light receiving sections of the first area to output a first summed signal, a second adder for adding outputs of the first and second light receiving sections of the second area to output a second summed signal, a first subtracter for subtracting an output of the first light receiving section from an output of the second light receiving section of the first light receiving area to output a first difference signal, a second subtracter for subtracting an output of the first light receiving section from an output of the second light receiving section of the second light receiving area to output a second difference signal, a level equalizing section for equalizing the levels of the first and second difference signals based on the first and second summed signals to output first and second level equalized signals, and a third adder for adding the first and second level to output a focus error signal.

In accordance with the present invention, a highly accurate focus error signals can be obtained because the offset resulting from the sensitivities of the photodetector or the unbalanced amount of split beams is cancelled in the focus error detecting system.

The above and other objects, features and advantages of the present invention will be more apparent from the following description, referring to the accompanying drawings.

### BRIEF DESCRIPTION OF THE DRAWINGS

Fig.1 is a block diagram of a conventional optical head;
Figs.2A, 2B and 2C show graphically three examples of the difference signals as S-shaped characteristic curves;
Fig.3 is a block diagram of an optical head according to a first embodiment of the present invention using a Foucault test method;
Fig.4 is a schematic top plan view of the photodetector shown in Fig.3;
Fig.5A is a perspective view of another example of the beam splitter;
Fig.5B is a schematic top plan view of another photodetector used in combination with the beam splitter of Fig.5A;
Fig.5C is a schematic top plan view of another example of a photodetector;
Fig.6 is a block diagram of a focus error detection system in an optical head according to a second embodiment of the present invention;
Fig.7A is a block diagram of a focus error detection system in an optical head according to a third embodiment of the present invention; and
Fig.7B is a schematic top plan view of the photodetector shown in Fig.7A.

### DESCRIPTION OF THE PREFERRED EMBODIMENTS

Now, the present invention is more specifically described with reference to the accompanying drawings, wherein similar constituent elements are designated by the same or similar reference numerals throughout the drawings.

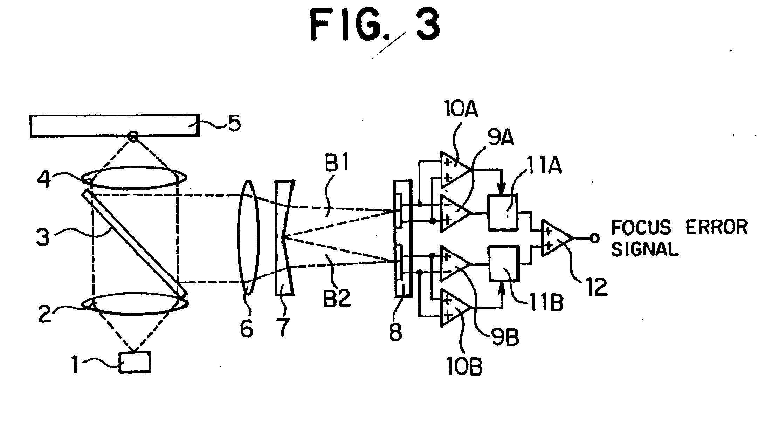

Referring to Fig.3, an optical head having a focus error detection system according to a first embodiment of the present invention detects a focus error signal by using a Foucault test method.

The laser beam emitted from a laser 1 is converted as a parallel light by a collimating lens 2, and then focused by a condensing lens 4 to form an optical spot which is incident on an optical disc 5. The reflected light from the optical disc 5 is separated by a beam splitter 3 or half mirror to be introduced to the focus error detection system. In the focus error detection system, the beam is converged by a convergence lens 6 and divided into two beams B1 and B2 by a wedge prism 7. The split beams B1 and B2 are received by a pair of light receiving areas 81 and 82, respectively, on a photodetector 8.

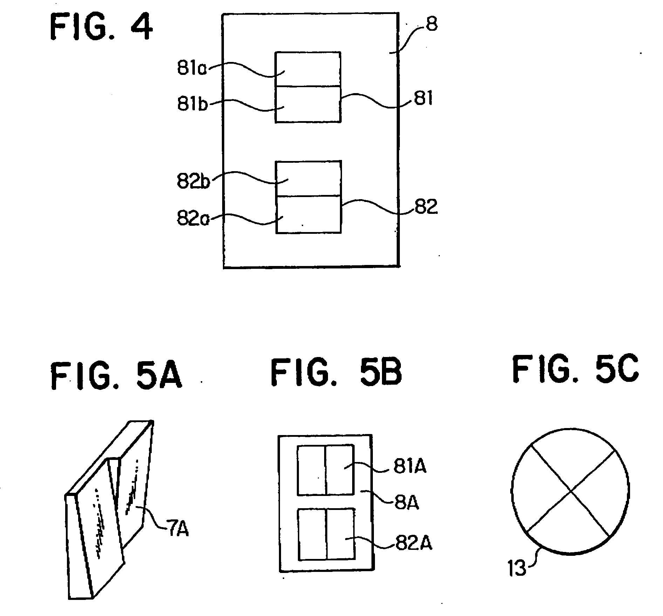

Referring to Fig.4 showing the configuration of the receiving areas 81 and 82 of the photodetector 8,each of the light receiving areas 81 and 82 of the photodetector device 8 has two divided receiving sections 81a and 81b, or 82a and 82b, divided by a central line. The central lines of both the light receiving areas 81 and 82 extend parallel to each other.

Turning back to Fig.3, the divided beams B1 and B2 are received by the respective pairs of divided sections 81a and 81b, and 82a and 82b, which supply the received signals to first and second subtracters 9A and 9B, respectively, and to first and second adders 10A and 10B, respectively, for generating difference signals and summed signals.

Each of the difference signals generated in the subtracters 9A and 9B is supplied to a corresponding gain control circuit 11A or 11B, the gain of which is controlled based on a corresponding one of summed signals generated in the adders 10A and 10B, to thereby normalize the difference signal.

Both the normalized difference signals are combined or added in a third adder 12 which outputs a focus error signal as the output of the focus error detection system.

Assume that both the amplitudes of the difference signals are different between the light receiving areas as shown in Fig.2C, which may be caused by the unbalance in the amount of light between the beams B1 and B2 due to the incorrect division by the wedge prism 7, or may be caused by the unbalance in the sensitivity between the receiving areas 81 and 82.

The difference in the amplitude can be cancelled by the respective adjustment of gains in the gain control circuits 11A and 11B based on the summed signals, to obtain substantially identical amplitudes in S-shaped characteristic. After the two signals are added in the third adder 12, an accurate focus error signal can be obtained, with the offset being cancelled.

In an alternative arrangement, only one of the gain control circuits may be provided for one of the two difference signals. In this case, the gain of the gain control circuit is adjusted based on the ratio between the two summed signals to normalize the amplitudes of one of the two difference signals.

In the embodiment as described above the collimating lens may be replaced by a convergence lens. Moreover, a combination of polarizing beam splitter and an isolator having a 1/4 wavelength plate may be used.

Furthermore, a wedge prism such as shown in Fig.5A which refracts the light parallel to the central dividing lines of the light receiving areas may be used as the wedge prism 7 in Fig.3 for dividing the reflected beam from the optical disc. In this case, the photodetector 8A shown in Fig.5B may be used which has central dividing lines of the receiving areas 81A and 82A lying in a straight line. Such a prism 7A for dividing the beam can be produced easily by a plastic molding technique and has an advantage in avoiding stray light.

As a further alternative arrangement, the beam can be divided into four beams, as shown in Fig.5C, two of which may be used for generating a focus error signal.

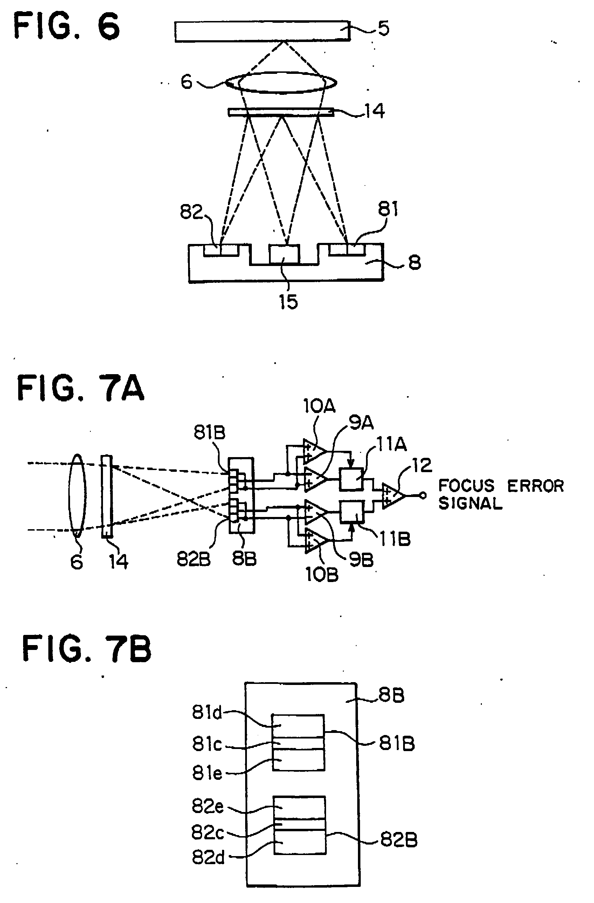

Referring to Fig.6 showing a focus error detection system in an optical head according to a second embodiment of the present invention, the focus error detection system comprises a hologram element 14 having a beam diffraction function, which is used for a beam dividing function. The reflected light from the optical disc 5 is converged by the convergence lens 6, then subject to diffraction while passing through the hologram element 14, and detected by the photodetector 15. In the photodetector, ±1^{st} diffraction beams are detected by the light receiving areas 81 and 82 of the photodetector 8 for generating a focus error signal.
In the present embodiment, a small size optical element can be obtained because of the small thickness of the hologram element.

Referring to Fig.7A, an optical head having a focus error detection system according to a third embodiment of the present invention uses a spot sizing method. The laser beam emitted from the laser not shown in the figure is reflected from the optical disc 5, then divided by the convergence lens 6 and hologram element 14 into two beams to be incident on the light receiving areas 81B and 82B of the photodetector 8B. The split beams have respective focal points, namely, a first focal point in front of the first light receiving area 81B and a second focal point at the rear side of the second light receiving area 82B, after the beam passed through the convergence lens 6 and hologram element 14.

Referring to Fig.7B, each of the two receiving areas 81B and 82B is divided into three subsections 81c, 81d and 81e, or 82c, 82d and 82e, by two parallel dividing lines. The outer two subsections 81d and 81e or 82d and 82e are electrically connected together. By this configuration, each of the light receiving areas 81B and 82B has two effective sections, with the central subsection 81c or 82c being separated from the other subsections.

If the focal point of the optical beam is shifted from the surface of the optical disc, S-shape characteristic curve is given by the difference signal at the beam receiving areas 81B and 82B. Since the S-shaped characteristic curves are opposite in polarity between the areas 81B and 82B, similarly to the case of the Foucalt method, an excellent focus error signal with less offset can be obtained by normalization based on summed signals in the gain control circuits 11A and 11B, and by adding the same in the third adder 12. Also in this embodiment, a prism may be used for beam division.

Since the above embodiments are described only for examples, the present invention is not limited to the above embodiments and various modifications or alterations can be easily made therefrom by those skilled in the art without departing from the scope of the present invention.

## Claims

1. A focus error detection system in an optical head comprising an optical system (1 to 4) for irradiating an optical disk (5) by an optical spot to receive said optical spot reflected from said optical disk (5), an optical divider (7) for dividing said reflected optical spot into a pair of optical beams (B1, B2), a photodetector (8) having first and second light receiving areas (81, 82) for receiving said pair of optical beams (B1, B2), respectively, each of said first and second light receiving areas (81, 82) having first and second light receiving sections (81a, 81b; 82a, 82b), characterized by:
a first adder (10A) for adding outputs of said first and second light receiving sections (81a, 81b) of said first area (81) to output a first summed signal;
a second adder (10B) for adding outputs of said first and second light receiving sections (82a, 82b) of said second area (82) to output a second summed signal;
a first subtracter (9A) for subtracting an output of said first light receiving section (81a) from an output of said second light receiving section (81b) of said first light receiving area to output a first difference signal;
a second subtracter (9B) for subtracting an output of said first light receiving section (82a) from an output of said second light receiving section (82b) of said second light receiving area (82) to output a second difference signal;
a level equalizing section (11A, 11B) for equalizing the levels of said first and second difference signals based on said first and second summed signals to output first and second level equalized signals; and
a third adder (12) for adding said first and second level equalized signal to output a focus error signal.

2. A focus error detection system as defined in claim 1 wherein said first and second light receiving sections (81a, 81b; 82a, 82b) receives one of said optical beams (B1, B2) at a boundary between said first and second light receiving sections (81a, 81b; 82a, 82b).

3. A focus error detection system as defined in claim 1 wherein said first light receiving section includes first and second light subsections (81d, 81e; 82d, 82e) sandwiching said second light receiving section (81c; 82c).

4. A focus error detection system as defined in claim 3 wherein said first and second light receiving areas (81B; 82B) are disposed at rear and front sides, respectively, of the focal points of said optical beams.

5. A focus error detection system as defined in claim 1 wherein said level equalizing section includes first and second normalizing members (11A, 11B) each normalizing a corresponding one of said first and second difference signal based on a corresponding one of said first and second summed signal.

6. A focus error detection system as defined in claim 1 wherein said optical divider is implemented by a prism (7, 7A).

7. A focus error detection system as defined in claim 1 wherein said optical divider is implemented by a hologram element (14).

8. A focus error detection system as defined in claim 1 wherein boundaries between said first light receiving section (81a, 82a) and second light receiving section (81b, 82b) of said first and second light receiving areas (81, 82) extend parallel to each other.

9. A focus error detection system as defined in claim 1 wherein boundaries between said first light receiving section and said second light receiving section of said first and second light receiving areas (81A, 82A) lie on a straight line.
